(19) Europäisches Patentamt
European Patent Office
Office européen des brevets

(11) **EP 2 455 788 A1**

(12) **EUROPEAN PATENT APPLICATION**
published in accordance with Art. 153(4) EPC

(43) Date of publication:
**23.05.2012 Bulletin 2012/21**

(51) Int Cl.:
**G02B 6/00** *(2006.01)* **H01S 3/06** *(2006.01)*

(21) Application number: **10799743.9**

(22) Date of filing: **02.07.2010**

(86) International application number:
**PCT/JP2010/061307**

(87) International publication number:
**WO 2011/007684 (20.01.2011 Gazette 2011/03)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **17.07.2009 JP 2009168939**

(71) Applicant: **Sumitomo Electric Industries, Ltd.**
**Chuo-ku**
**Osaka-shi**
**Osaka 541-0041 (JP)**

(72) Inventors:
• **NAGASHIMA, Takuji**
**Yokohama-shi**
**Kanagawa 244-8588 (JP)**
• **TARU, Toshiki**
**Yokohama-shi**
**Kanagawa 244-8588 (JP)**

(74) Representative: **HOFFMANN EITLE**
**Patent- und Rechtsanwälte**
**Arabellastraße 4**
**81925 München (DE)**

(54) **PHOTONIC CRYSTAL FIBER**

(57) Provided is a photonic crystal fiber capable of fusion-splicing with an ordinary optical fiber at low splicing loss and having a core region and a cladding region that surrounds the core region, wherein the cladding region is structured such that high refractive index sub-regions are periodically arranged in a two-dimensional periodic structure in the low refractive index background sub-region at a cross-section perpendicular to the fiber axis, and wherein the refractive index of the core region is higher than the refractive index of the low refractive index background sub-region. The refractive index profile of the photonic crystal fiber is uniform along the fiber axis. The effective refractive index of the core guided mode may be higher than the refractive index of the low refractive index background sub-region.

FIG. 7

**Description**

Technical Field

The present invention relates to a photonic crystal fiber.

Background Art

Japanese Patent Application Publication No. 2007-316526 (Patent document 1) discloses an optical fiber including a core region and a cladding region, the cladding region having a two-dimensional periodic structure in which high refractive index regions are arranged periodically in a low refractive index background region at a cross-section perpendicular to the fiber axis. Such an optical fiber can have characteristics that an ordinary optical fiber cannot have, and hence is expected to be applicable to various uses. However, the disadvantage of the optical fiber disclosed in Patent document 1 is that the splicing loss becomes larger when it is fusion-spliced with an ordinary optical fiber.

SUMMARY OF THE INVENTION

Problem to be solved by the invention

The object of the present invention is to provide a photonic crystal fiber that allows low-loss fusion-splicing with an ordinary optical fiber.

Means for solving the problem

To achieve the object, provided is a photonic crystal fiber having a core region and a cladding region that surrounds the core region, wherein the cladding region is structured such that high refractive index sub-regions are periodically arranged in a two-dimensional periodic structure in the low refractive index background sub-region at a cross-section perpendicular to the fiber axis, and wherein the refractive index of the core region is higher than the refractive index of the low refractive index background sub-region. The refractive index profile of the photonic crystal fiber is uniform along the fiber axis.

In the photonic crystal fiber relating to the present invention, the effective refractive index of the core guided mode may be higher than the refractive index of the low refractive index background sub-region. In such case, the sequential period of the high refractive index sub-regions and the diameter of the high refractive index sub-regions may be chosen so as to conjugate the core guided mode with the cladding guided mode of $LP_{21}$ or $LP_{02}$, thereby blocking off light of an unnecessary wavelength, or the sequential period of the high refractive index sub-regions and the diameter of the high refractive index sub-regions may be chosen so as to conjugate the core guided mode with the cladding guided mode of $LP_{11}$, thereby blocking off light of an unnecessary wavelength. Preferably, NA that is defined by refractive index difference between the core region and the low refractive index background sub-region is a value between 0.05 and 0.30.

BRIEF DESCRIPTION OF THE DRAWINGS

Fig. 1 is a cross-sectional view showing a basic structure perpendicular to the fiber axis in the cladding region of a photonic crystal fiber.
Fig. 2 is a graph showing an example of refractive index profile taken along a broken line II-II in the basic structure shown in Fig. 1.
Fig. 3 is a graph showing an example of photon density of state derived from the basic structure shown in Fig. 1.
Fig. 4 is a cross-sectional figure of an optical fiber in Comparative example, the figure showing a section that is perpendicular to the fiber axis.
Fig. 5 is a figure showing light intensity distribution of a core guided mode of the optical fiber of Fig. 4.
Fig. 6 is a figure showing electric field distribution of a core guided mode of the optical fiber of Fig. 4.
Fig. 7 is a cross-sectional view that is perpendicular to the fiber axis of a photonic crystal fiber in an embodiment of the present invention.
Fig. 8 is a graph showing a refractive index profile taken along a broken line VIII-VIII of Fig. 7 of the photonic crystal fiber.
Fig. 9 is a figure showing light intensity distribution of a core guided mode of the photonic crystal fiber of Fig. 7.
Fig. 10 is a figure showing electric field distribution of a core guided mode of the photonic crystal fiber of Fig. 7.
Fig. 11 is a graph showing transparency characteristics of a photonic crystal fiber in an example of the present invention.

Fig. 12 is a graph showing transparency characteristics of a photonic crystal fiber in another example of the present invention.

DETAILED DESCRIPTION OF THE INVENTION

Hereinafter, preferred embodiments of the present invention will be described in detail in reference to the accompanying drawings. In the drawings, an identical mark represents the same element, and the repetition of explanation will be omitted.

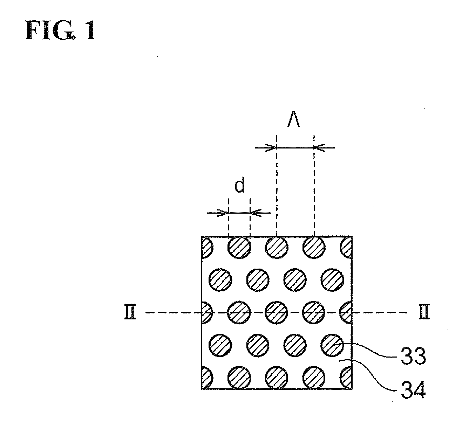

Figure 1 shows a cross-sectional view of basic structure perpendicular to the fiber axis in the cladding region of a photonic crystal fiber. The cladding region of the photonic crystal fiber is structured such that a plurality of high refractive index sub-regions 33 are periodically arranged in a triangular lattice form of two-dimensional periodic structure in the low refractive index background sub-region 34. The cladding region has a uniform refractive index profile in the axial direction (the direction perpendicular to the face of the drawing) of the fiber.

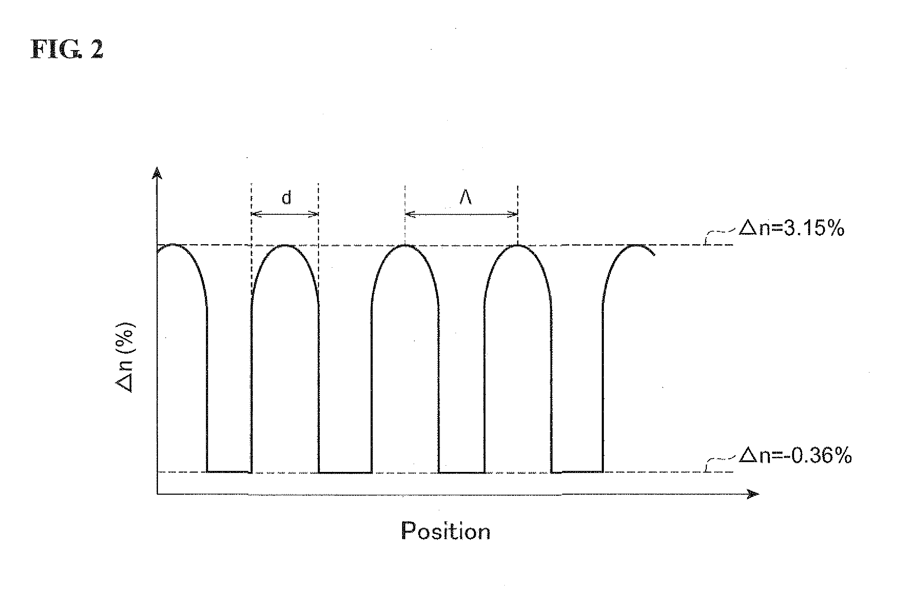

Figure 2 is a graph showing an example of refractive index profile taken along a broken line II-II in the basic structure shown in Fig. 1. In an example, the relative refractive index difference of high refractive index sub-regions 33 is 3.15 %, and the relative refractive index difference of the low refractive index background sub-region 34 is -0.36 %. Also, the ratio (d/A) of the diameter d of the high refractive index sub-region 33 and the sequential period A of the high refractive index sub-region 33 is 0.6. In this specification, the term "relative refractive index difference" means a value relative to refractive index $n_{SiO2}$ of silica glass which does not include a dopant, i.e., "$\Delta n = (n - n_{SiO2})/n$",

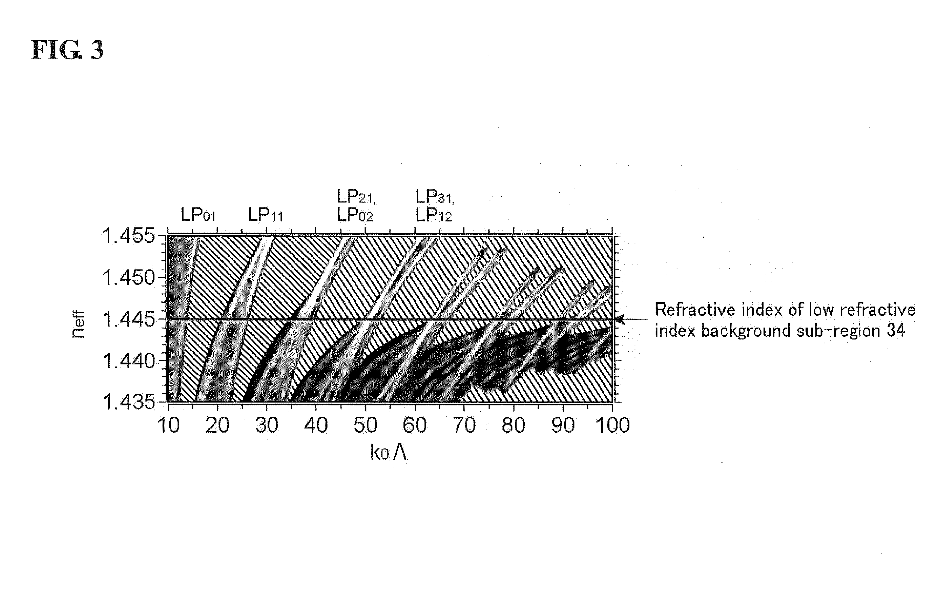

Figure 3 is a graph showing an example of photon density of state derived from the basic structure shown in Fig. 1: the abscissa is a product of wave number $k_0$ of light in the photonic crystal fiber and the sequence period A of the high refractive index sub-region 33, whereas the ordinate is effective refractive index neff of the light in the photonic crystal fiber. In Fig. 3, hatched regions are regions where light cannot exist, and the other regions (white - black regions) are regions where the light can exist. In the other regions, the closer to the white the color is, the larger the photon density of state is. The refractive index of the low refractive index background sub-region 34 is 1.445.

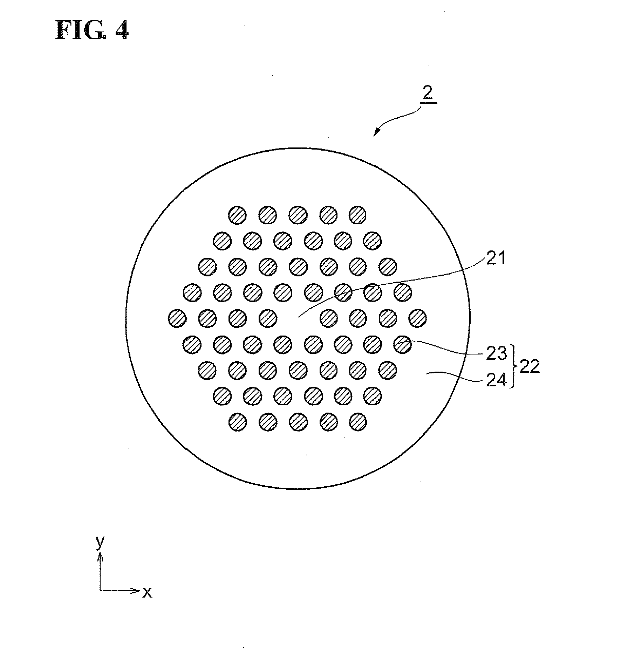

Figure 4 is a cross-section of an optical fiber 2 in Comparative example, the cross-section being perpendicular to the fiber axis. The optical fiber 2 consists of silica glass and includes a core region 21 and a cladding region 22 that surrounds the core region 21. The refractive index profile of the optical fiber 2 is uniform along the fiber axis. The cladding region 22 is structured such that high refractive index sub-regions 23 are arranged periodically in a triangular lattice form of two-dimensional periodic structure in the low refractive index background sub-region 24 at a section which is perpendicular to the fiber axis. The core region 21 is formed in a manner in which such two-dimensional periodic structure does not exist (non-existence of high refractive index sub-regions at the lattice nodes of the two-dimensional periodic structure), and the refractive index of the core region 21 is the same as the refractive index of the low refractive index background sub-region 24.

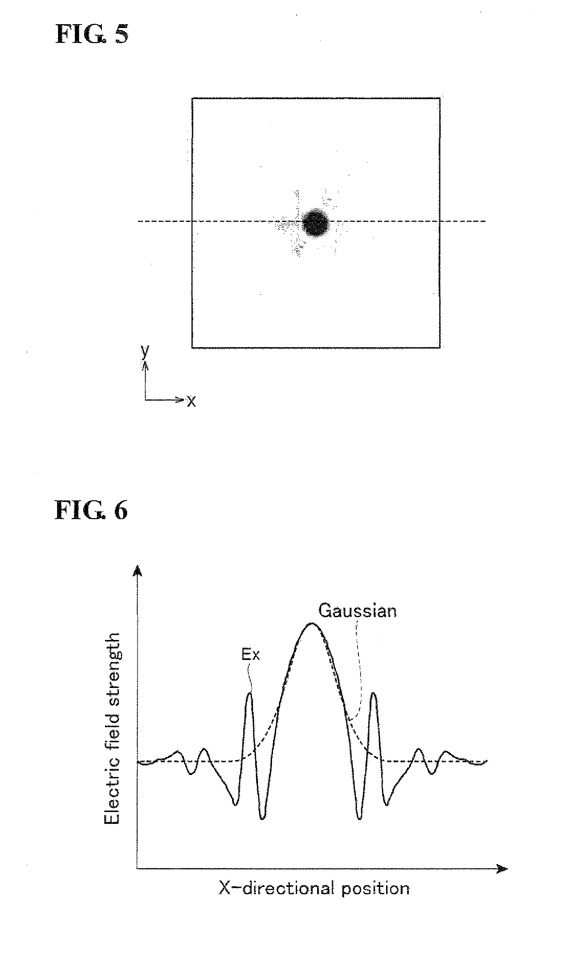

Figure 5 shows light intensity distribution of a core guided mode of the optical fiber 2. Figure 6 is a figure showing electric field distribution of a core guided mode of the optical fiber. In Fig. 6, the solid line Ex is an x-directional element of electric field at each position on the straight line extending in the x-direction across the center of the core region 21 of the optical fiber 2 in Figs. 4 and 5. The broken line is electric-field distribution in a usual step-index single mode fiber. The electric-field distribution Ex of the core guided mode of the optical fiber 2 significantly differs from the electric-field distribution (Gaussian distribution) of the core guided mode of an ordinary optical fiber, and the splicing loss of connecting the optical fiber 2 with the ordinary optical fiber is large. (The optical coupling efficiency $\eta_{12}$ for connection between an optical fiber whose electric-field distribution of the core guided mode is $E_1(r)$ and an optical fiber whose electric-field distribution of the core guided mode is $E_2(r)$ is expressed by equation

$$\eta_{12} = \frac{\left[\int_S E_1(r)E_2(r)dS\right]^2}{\left[\int_S E_1(r)^2 dS\right]\left[\int_S E_2(r)^2 dS\right]},$$

where r is a variable representing a position of radial direction. The larger the difference between E1 and E2 in the electric-field distribution, the larger the splicing loss.)

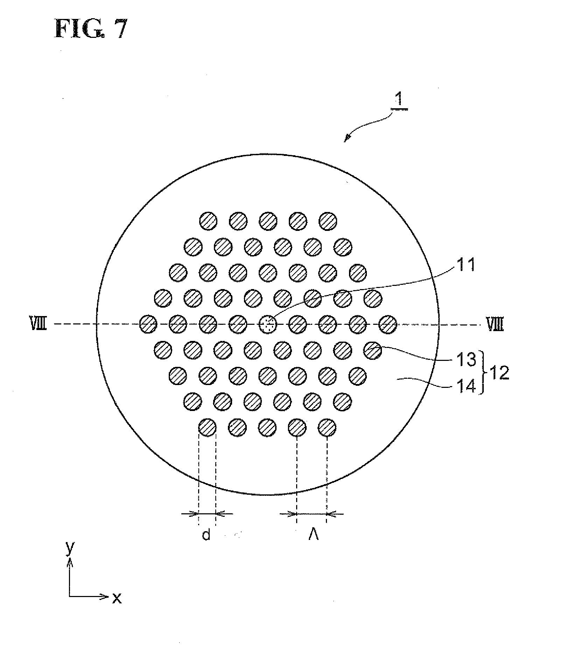

Figure 7 shows a cross-sectional view perpendicular to the fiber axis of a photonic crystal fiber 1 in an embodiment of the present invention. The photonic crystal fiber 1 consists of silica glass and includes a core region 11 and cladding regions 12 surrounding the core region 11, and has a uniform refractive index profile along the fiber axis. The cladding region 12 is structured such that high refractive index sub-regions 13 are periodically arranged in a triangular lattice form of two-dimensional periodic structure in the low refractive index background sub-region 14 at the section perpendicular to the fiber axis. The core region 11, which exists at a position that lacks the two-dimensional periodic structure at the central position of the cross-section, has a refractive index that is higher than the refractive index of the low refractive index background sub-region 14. Also, the effective refractive index of the core guided mode is higher than the refractive index of the low refractive index background sub-region 14.

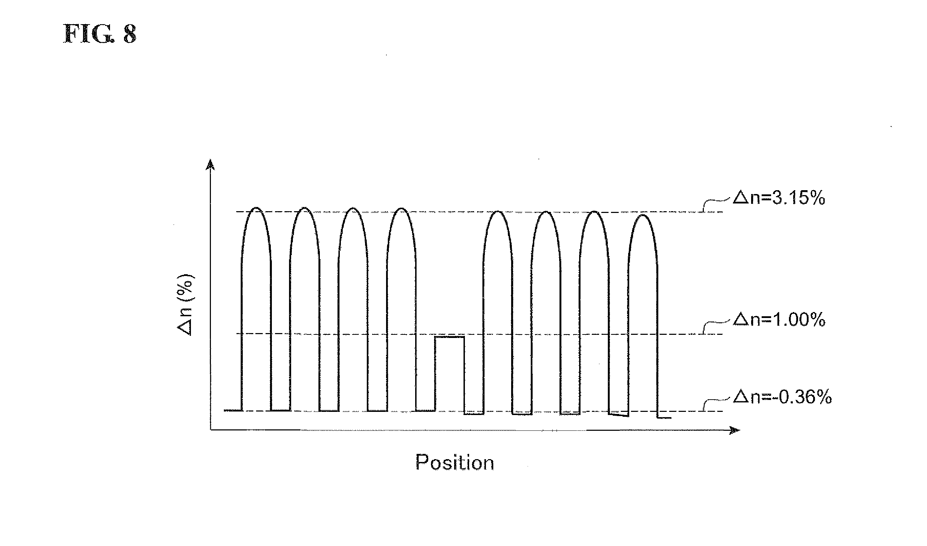

Figure 8 is a graph showing an example of refractive index profile taken along a broken line VIII-VIII of Fig. 7 of the photonic crystal fiber. By way of example of the photonic crystal fiber 1, fibers A and B having the following characteristics were prepared and evaluated: relative refractive index difference of the core region 11 is 1.00 %, the relative refractive index difference of high refractive index sub-regions 13 is 3.15%, the relative refractive index difference of the low refractive index background sub-region 14 is -0.36 %, and the sequential period A of the high refractive index sub-region 13 and the diameter (core diameter) d of the high refractive index sub-region 13 are the values of Table I, respectively.

Table I

|  | Core diameter ($\mu$m) | Sequential period ($\mu$m) | Diameter of high refractive index sub-region ($\mu$m) |
|---|---|---|---|
| Fiber A | 4.4 | 10.2 | 6.1 |
| Fiber B | 3.9 | 10.5 | 6.3 |

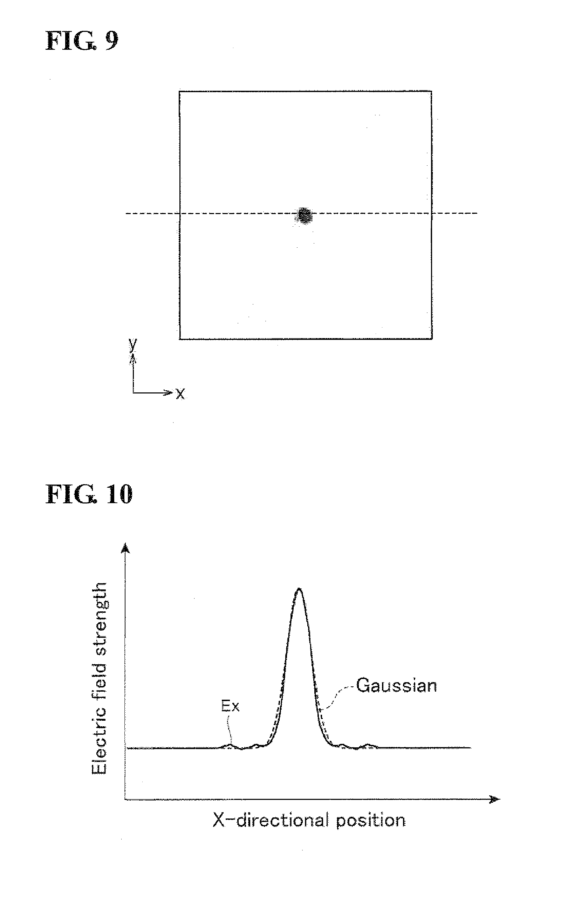

Figure 9 shows light intensity distribution of the core guided mode of the optical fiber A. Figure 10 is a graph showing the electric-field distribution of the core guided mode of the optical fiber A. In Fig. 10, the solid line Ex is an x-directional element of electric field at each position on the straight line extending in the x-direction across the center of the core region 11 of the optical fiber A in Figs. 7 and 9. The broken line is electric-field distribution in a usual step-index single-mode fiber. The electric-field distribution Ex of the core guided mode of the optical fiber A exhibits a shape that is nearly the same as the electric-field distribution (Gaussian distribution) of the core guided mode of an ordinary optical fiber. Therefore, the splicing loss of the photonic crystal fiber 1, which includes optical fibers A, B, according to the embodiment of the present invention is small when it is fusion-spliced with the ordinary optical fiber.

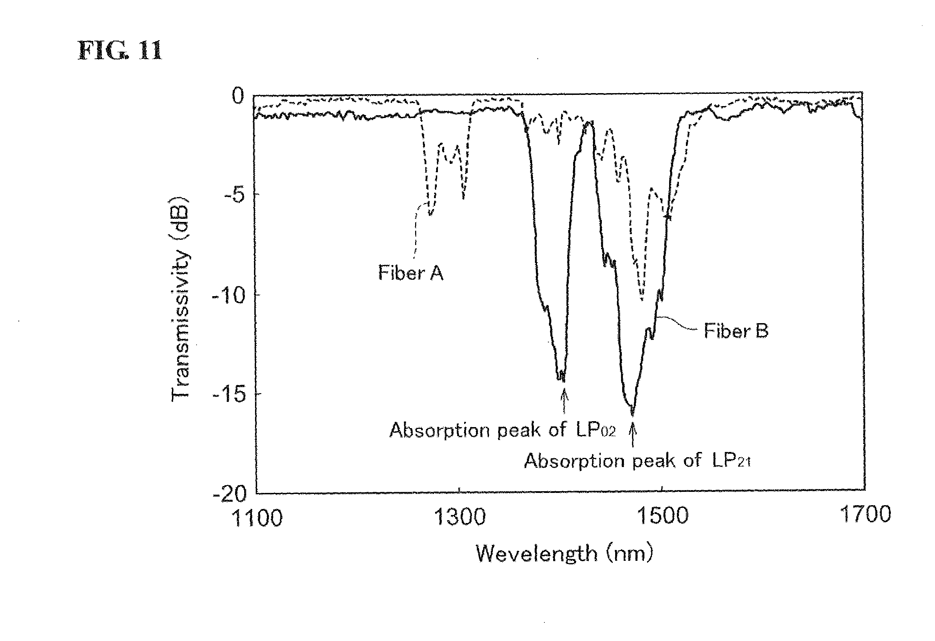

Figure 11 is a graph showing transparency characteristics of the optical fibers A and B. The abscissa is a wavelength, while the ordinate is a transmissivity which is a value including attenuation due to splicing loss at both ends of the optical fibers A and B. Each length of the optical fibers A and B is 0.5 m. In both of the optical fibers A and B, the refractive index profile of the core region 11 has become nearly the same as the refractive index profile of a fiber for general use, and accordingly the matching in the mode field is improved, reducing the fusion-splicing loss (loss at a wavelength outside the cutoff band) to 0.5 dB or less.

In the photonic crystal fiber 1, the refractive index of the core region is higher than the refractive index of the low refractive index background sub-region, and the effective refractive index of the core guided mode is higher than the refractive index of the low refractive index background sub-region 14 of the cladding region 12. In this case, the waveguiding principle of core mode is not photonic band gap guidance but is refractive index guidance. Since the wavelength width of the cladding guided mode to be coupled decreases when the effective refractive index of the core guided mode increases, it is possible to achieve a narrower cutoff band as compared with a conventional optical fiber structure. The cutoff band seen in Fig. 11 is caused as a result of the core guided mode coupling to the cladding guided mode ($LP_{21}$, $LP_{02}$), and it is narrower as compared with the conventional optical fiber structure.

Table II is the specifications of another example (Fiber C) of photonic crystal fiber 1 according to the embodiment of the present invention.

Table II

| | |
|---|---|
| Relative refractive index difference of the core region: | 1.00% |
| Relative refractive index difference of high refractive index sub-regions: | 3.14% |
| Relative refractive index difference of the background sub-region: | -0.36% |
| Core diameter: | 2.8 $\mu$m |
| Sequential period $\Lambda$ of high refractive index sub-region: | 5.8 $\mu$m |
| Diameter d of high refractive index sub-region: | 3.5 $\mu$m |

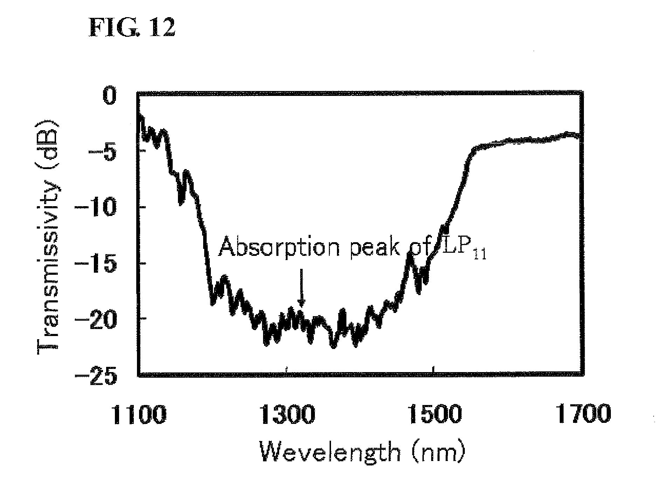

Figure 12 is a graph showing transmitting characteristics of Optical fiber C. The abscissa shows wavelengths, and the ordinate shows transmissivity which is a value including attenuation due to splicing loss at both ends of Optical fiber C.

The length of Optical fiber C is 0.4 m. The graph shows that a cutoff band due to the two-dimensional periodic structure of the cladding region 12 is obtained. The cutoff band seen in Fig. 12 is a result of the core guided mode coupling to the cladding guided mode ($LP_{11}$). When the cladding guided mode coupled with the core guided mode is $LP_{11}$, the merit is that the width of the cutoff band becomes wide. Also, when the cladding guided mode coupled with the core guided mode is of high order ($LP_{31}$, $LP_{12}$, or the like), the filtering property becomes sharper and the width of the cutoff band becomes narrower.

The photonic crystal fiber 1 can be used as an optical filter for removing light of unnecessary wavelengths. For example, by placing the photonic crystal fiber 1 at the output stage of a high-power fiber laser, it is possible to achieve output of high power, while Raman components contained in the output light can be removed. Since the photonic crystal fiber 1 can be made only with silica glass, it can bear high power, and also can be mounted only by means of fiber fusion-splicing. Moreover, the generation of heat at a spliced part and the fusion of the core can be prevented since the splicing loss is low.

The photonic crystal fiber 1 can be used as an optical fiber for amplification by adding a rare-earth element, such as Er, Yb, or the like, to the core region 11. In such case, the photonic crystal fiber 1 is capable of blocking off noise light due to the rare-earth element, and in the case of high power, it can block off unnecessary light generated by nonlinear phenomenon. Also, with the photonic crystal fiber 1, it is possible not only to improve gain of signal light by restraining the amplification of noise light, but also to prevent the output from being degraded by stimulated Raman scattering in a high-power fiber laser. Moreover, by the reduction in the splicing loss, it is possible to prevent the degradation of output caused by the stimulated Raman scattering, without compromising the gain improvement effect.

From the viewpoint of reducing the splicing loss in the case of fusion-splicing with an ordinary optical fiber, the photonic crystal fiber 1 preferably has NA that is a value between 0.05 and 0.30, where NA is defined by the refractive index difference between the core region 11 and the low refractive index background sub-region 14. This is because NA must be coincident with an optical fiber to which the photonic crystal fiber 1 is fusion-spliced. An example of optical fiber having a low NA is an optical fiber used for a high power fiber laser. An example of optical fiber having a high NA is a highly nonlinear optical fiber. Another characteristic of the photonic crystal fiber 1 is that it is easy to perform substantively in single mode since the loss of high order mode is large.

The present invention is not limited to the above embodiment, and various variations are possible. For example, In the present invention, the core region may be formed as a region where there are no high refractive index sub-regions at a plurality of (e.g., seven) lattice nodes of the two-dimensional periodic structure at the central part of the cross-section, although in the above embodiment, the core region 11 is formed as a region where the non-existence of high refractive index sub-region is located at one point corresponding to a lattice node of the two-dimensional periodic structure at the center of the cross-section.

INDUSTRIAL APPLICABILITY

The photonic crystal fiber of the present invention can be used as an optical fiber for an optical filter or amplification.

LISTING OF PRIOR ART

Patent document

Patent document 1: Japanese Patent Application Publication No. 2007-316526

**Claims**

1.  A photonic crystal fiber having a core region and a cladding region surrounding the core region,
    wherein the cladding region is structured such that high refractive index sub-regions are periodically arranged in a two-dimensional periodic structure in the low refractive index background sub-region at a cross-section perpendicular to the fiber axis, and
    wherein the refractive index of the core region is higher than the refractive index of the low refractive index background sub-region, the refractive index profile of the photonic crystal fiber being uniform along the fiber axis.

2.  A photonic crystal fiber according to claim 1,
    wherein the effective refractive index of the core guided mode is higher than the refractive index of the low refractive index background sub-region.

**3.** A photonic crystal fiber according to claim 2,
wherein the sequential period of the high refractive index sub-regions and the diameter of the high refractive index sub-regions are chosen so as to conjugate the core guided mode with the cladding guided mode of $LP_{21}$ or $LP_{02}$, thereby blocking off light of an unnecessary wavelength.

**4.** A photonic crystal fiber according to claim 2,
wherein the sequential period of the high refractive index sub-regions and the diameter of the high refractive index sub-regions are chosen so as to conjugate the core guided mode with the cladding guided mode of $LP_{11}$, thereby blocking off light of an unnecessary wavelength.

**5.** A photonic crystal fiber according to claim 2,
wherein NA defined by refractive index difference between the core region and the low refractive index background sub-region is a value between 0.05 and 0.30.

FIG. 1

FIG. 2

EP 2 455 788 A1

FIG. 3

FIG. 4

## FIG. 5

## FIG. 6

FIG. 7

FIG. 8

## FIG. 9

## FIG. 10

FIG. 11

FIG. 12

## INTERNATIONAL SEARCH REPORT

| International application No. |
| --- |
| PCT/JP2010/061307 |

**A. CLASSIFICATION OF SUBJECT MATTER**
*G02B6/00*(2006.01)i, *H01S3/06*(2006.01)i

According to International Patent Classification (IPC) or to both national classification and IPC

**B. FIELDS SEARCHED**

Minimum documentation searched (classification system followed by classification symbols)
G02B6/00-6/036, H01S3/06-3/067

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
WPI, JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2008/053922 A1 (Fujikura Ltd.),<br>08 May 2008 (08.05.2008),<br>paragraphs [0030] to [0052], [0057] to [0059];<br>fig. 1 to 9, 15 to 17<br>& US 2009/0207485 A1 & EP 2103971 A1 | 1,2,5<br>3,4 |
| X<br>Y | JP 2009-76493 A (Sumitomo Electric Industries,<br>Ltd.),<br>09 April 2009 (09.04.2009),<br>paragraphs [0027], [0028], [0037], [0039] to<br>[0041]; fig. 1 to 6<br>(Family: none) | 1,2,5<br>3,4 |
| X | Ryuichiro GOTO et al., "Silica-Based Wide-Band<br>Solid Photonic Band-Gap Fibre", IEICE Technical<br>Report, 17 August 2006 (17.08.2006), vol.106,<br>no.210 (OCS2006-36), pages 39 to 42 | 1,2 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 August, 2010 (12.08.10) | Date of mailing of the international search report<br>24 August, 2010 (24.08.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/061307 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | Ryuichiro GOTO et al., "Loss Reduction of Solid Photonic Band-Gap Fibre", Proceedings of the 2007 IEICE General Conference, Tsushin 2, 07 March 2007 (07.03.2007), page 513 (lecture no. B-13-18) | 1,2 |
| A | JP 2008-226885 A  (Fujikura Ltd.), 25 September 2008 (25.09.2008), paragraphs [0032] to [0034]; fig. 1 to 3 (Family: none) | 1-5 |
| A | US 2009/0168149 A1  (PETERSSON, A.), 02 July 2009 (02.07.2009), paragraph [0239]; fig. 6 & EP 1969685 A2          & WO 2007/057024 A2 | 1-5 |
| P,X | WO 2009/104691 A1  (Fujikura Ltd.), 27 August 2009 (27.08.2009), paragraphs [0033] to [0046]; fig. 3A to 4C & JP 4443627 B | 1,2,5 |
| P,X | JP 2010-80884 A  (Sumitomo Electric Industries, Ltd.), 08 April 2010 (08.04.2010), paragraph [0035]; fig. 10, 11 (Family: none) | 1,2,5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007316526 A